# EUROPÄISCHE PATENTSCHRIFT

(11) **EP 2 258 514 B1**
(45) Veröffentlichungstag und Bekanntmachung des Hinweises auf die Patenterteilung: **26.10.2011**
(21) Anmeldenummer: 09007442.8
(22) Anmeldetag: 05.06.2009
(51) Int. Cl.: B23P 19/08, B25B 27/00

(54) **Verfahren und Vorrichtung zum Einsetzen eines Elastomerrings in eine Ringnut**
Method and device for inserting an elastomer ring into an annular groove
Procédé et dispositif d'insertion d'une bague élastomère dans une rainure annulaire

(43) Veröffentlichungstag der Anmeldung: 08.12.2010
(73) Patentinhaber: SIM Automation GmbH & Co. KG, 37308 Heilbad Heiligenstadt (DE)
(72) Erfinder: Elsner, Peter, 37318 Thalwenden (DE)
(74) Vertreter: Albrecht, Rainer Harald

(56) Entgegenhaltungen:
- EP-A- 2 025 479
- DE-A1- 3 409 845
- DE-A1- 10 204 733
- JP-A- 3 251 325
- JP-A- 11 033 842

## Beschreibung

Die Erfindung betrifft ein Verfahren sowie eine Vorrichtung zum Einsetzen eines Elastomerrings in eine Ringnut, die in einer Stirnfläche innerhalb eines Hohlkörpers angeordnet ist gemäß dem Oberbegriff der Ansprüche 1 und 4. Ein solches Verfahren bzw. eine solche Vorrichtung sind aus JP 11 033 842 bekannt. Unter den Begriff "Elastomerring" fallen insbesondere Dichtungsringe aus elastomeren Materialien.

Bei dem Hohlkörper kann es sich beispielsweise um einen Gehäusedeckel handeln, an dessen innenliegender Stimfläche ein elastomerer Dichtungsring montiert werden muss. Dieser ist in eine Ringnut einzubringen, die in einer stirnseitigen Deckelfläche angeordnet ist und beispielsweise an eine mit einem Innengewinde versehene umfangsseitige Mantelfläche angrenzt. Bei einer solchen Anordnung muss das Verfahren zum Einsetzen des Elastomerrings eine Vielzahl von Anforderungen erfüllen, um eine ordnungsgemäße Montage ohne Schädigung des Elastomerrings zu gewährleisten. Beim axialen Einsetzen des Elastomerrings in die Ringnut soll dieser die oft unmittelbar an die Ringnut angrenzende zylindrische Umfangsfläche des Deckels bzw. Hohlkörpers nicht berühren. Insbesondere wenn der Elastomerring keinen runden Querschnitt aufweist, darf der Elastomerring beim Einsetzen in die Ringnut nicht radial deformiert und nicht gerollt werden. Beim Einsetzen eines Elastomerrings in eine Ringnut, die eine an den Querschnitt des Elastomerrings angepasste normgerechte Ringnutbreite aufweist, ist ferner zu beachten, dass sich bei einem planen Einsetzen des Elastomerrings in die Ringnut ein Luftpolster zwischen dem Nutgrund der Ringnut und dem Elastomerring ausbilden kann, der einem ordnungsgemäßen Sitz des Elastomerrings in der Ringnut entgegenwirkt. Schließlich ist zu berücksichtigen, dass das für die Montage des Eleastomerrings verwendete Werkzeug den Gehäusedeckel bzw. die Flächen des Hohlkörpers nicht berühren darf. Diese Anforderung ist insbesondere zu erfüllen, wenn der Hohlkörper aus einem kratzempfindlichen Kunststoff besteht oder es sich um ein Bauteil für medizinische Anwendungen handelt.

Der Erfindung liegt die Aufgabe zugrunde, ein Verfahren zum axialen Einsetzen eines Elastomerrings in eine Ringnut anzugeben, welches den vorgenannten Anforderungen Rechnung trägt.

Gegenstand der Erfindung und Lösung dieser Aufgabe ist ein Verfahren nach Anspruch 1. Erfindungsgemäß wird der zu montierende Elastomerring in einem ersten Verfahrensschritt a) von radial verstellbaren Fingern einer Greifeinheit aufgenommen und durch eine axiale Relativbewegung zwischen der Greifeinheit und einer die Greifeinheit umgebenden Hülse gegen eine stirnseitige Profilfläche der Hülse gespannt, wobei der gegen die Profilfläche gespannte Elastomerring in Umfangsrichtung einen wellenförmigen Verlauf aus alternierend vorstehenden und zurückspringenden Abschnitten einnimmt. In einem zweiten Verfahrensschritt b) wird der wellenförmig gespannte Elastomerring vor der Ringnut positioniert, wobei die vorstehenden Abschnitte des Elastomerrings in die Ringnut eintauchen. Mittels einer radial nach innen gerichteten Stellbewegung der Finger der Greifeinheit wird die wellenförmige Vorspannung des Elastomerrings in einem dritten Verfahrensschritt c) gelöst, wobei der Elastomerring in eine plane Lage zurückfedert und dabei in die Ringnut einschnappt.

Der Elastomerring wird vorzugsweise im Verahrensschritt a) von einer Fläche aufgenommen, in der eine Aufnahmevertiefung für die Greifeinheit mit sternförmig sich erstreckenden Nuten angeordnet ist. Zur Aufnahme des Elastomerrings wird die Greifeinheit durch den auf der Fläche aufliegenden Elastomerring hindurch in die Aufnahmevertiefung eingeführt. Anschließend werden die Finger der Greifeinheit radial nach außen verstellt und unterfassen den Elastomerring. Durch eine axiale Stellbewegung der Greifeinheit ziehen die Finger der Greifeinheit den Elastomerring anschließend gegen die Profilfläche der Hülse und spannen den Elastomerring auf diese Weise wellenförmig.

Anstelle einer axialen Stellbewegung der Greifeinheit kann der Spannvorgang auch durch eine axiale Stellbewegung der die Greifeinheit umgebenden Hülse erfolgen.

Im Anschluss an den Verfahrensschritt c) können die Finger der Greifeinheit wieder radial nach außen verstellt werden, wobei sie den bereits in der Ringnut liegenden Elastomerring übergreifen. Mittels einer axialen Stellbewegung der Greifeinheit kann der Elastomerring dann in der Ringnut nachgedrückt werden. Durch diesen zusätzlichen Verfahrensschritt wird sichergestellt, dass der Elastomerring an allen Umfangsabschnitten plan an dem Nutgrund der Ringnut anliegt.

Gegenstand der Erfindung ist auch ein Montagewerkzeug nach Anspruch 4 zur Durchführung des beschriebenen Verfahrens. Das erfindungsgemäße Montagewerkzeug umfasst ein Gehäuse, eine im Gehäuse gelagerte Greifeinheit, die mehrere an der Unterseite des Gehäuses vorstehende radial verstellbare Finger aufweist, und eine an der Unterseite des Gehäuses angeordnete Hülse, die eine stimseitige Profilfläche aus alternierend angeordneten vorstehenden Profilabschnitten und zurückspringenden Profilabschnitten aufweist. Die Greifeinheit ist zwischen einer ersten Position, in der die Finger an der Unterseite der Hülse vorstehen, und einer zweiten Position, in der die Finger in die zurückspringenden Profilabschnitte der Profilfläche eintauchen, axial verstellbar. Vorzugsweise weist die stirnseitige Profilfläche der Hülse in Umfangsrichtung ein wellenförmiges Profil auf, welches sich aus gerundeten Wellenbergen und Wellentälern zusammensetzt. Andere geometrische Ausgestaltungen der Profilfläche sollen jedoch nicht ausgeschlossen sein.

Die Finger der Greifeinheit sind in radialer Richtung zwischen zwei Funktionsstellungen verstellbar. In der ersten Funktionsstellung liegt das freie Ende der Finger auf einem Kreis, dessen Durchmesser kleiner ist als der Innendurchmesser der Hülse. In der zweiten Funktionsstellung liegt das freie Ende der Finger auf einem Kreis, dessen Durchmesser dem Außendurchmesser der Hülse entspricht.

Damit der Elastomerring bei der zuvor beschriebenen axialen Spannbewegung nicht radial deformiert wird, ist gemäß einer bevorzugten Ausgestaltung des Montagewerkzeuges innerhalb der Hülse eine Kalibrierhülse angeordnet, an deren Umfang der Elastomerring während der Spannbewegung anliegt. Die Kalibrierhülse steht an der Profilfläche axial vor und weist von den Fingern der Greifeinheit durchfasste mantelseitige Schlitze auf. Die Schlitze sind an die Abmessungen der Finger der Greifeinheit angepasst und schmaler als die zurückspringenden Profilabschnitte in der Profilfläche der die Kalibrierhülse umgebenden Hülse. Die Kalibrierhülse bewirkt, dass der wellenförmig an der Profilfläche gespannte Elastomerring einen Innendurchmesser aufweist, der exakt auf den Durchmesser der Ringnut abgestimmt ist. Fertigungsbedingte Maßabweichungen des Elastomerrings können durch die Verwendung der Kalibrierhülse beseitigt werden. Die Kalibrierhülse weist vorzugsweise eine plane Stirnfläche auf, die an den vorstehenden Abschnitten bzw. Wellenbergen der Profilfläche um eine Länge übersteht, die kleiner ist als die Dicke des zu montierenden und an der Profilfläche der Hülse anliegenden Elastomerrings. Der an den vorstehenden Abschnitten der Profilfläche gemessene Überstand der Kalibrierhülse ist so gewählt, dass der Elastomerring im Verfahrensschritt b) einerseits in die Ringnut eintaucht und andererseits umfangsseitig an der Kalibrierhülse noch anliegt.

Im Folgenden wird die Erfindung anhand eines Ausführungsbeispiels erläutert. Es zeigen schematisch
- Fig. 1: ein Montagewerkzeug zum Einsetzen eines Elastomerrings in eine Ringnut,
- Fig. 2A: eine Vorrichtung mit dem in Fig. 1 dargestellten Monatagewerk- zeug sowie einer Einrichtung zur Übergabe des Elastomerrings an das Montagewerkzeug,
- Fig. 2B: einen Längsschnitt durch die in Fig. 2A dargestellte Vorrichtung in der Schnittebene A-A,
- Fig. 3A/3B bis Fig. 10A/10B: die Verfahrensschritte eines Verfahrens zum Einsetzen eines Elastomerrings in eine Ringnut unter Verwendung des in Fig. 1 dargestellten Montagewerkzeugs.

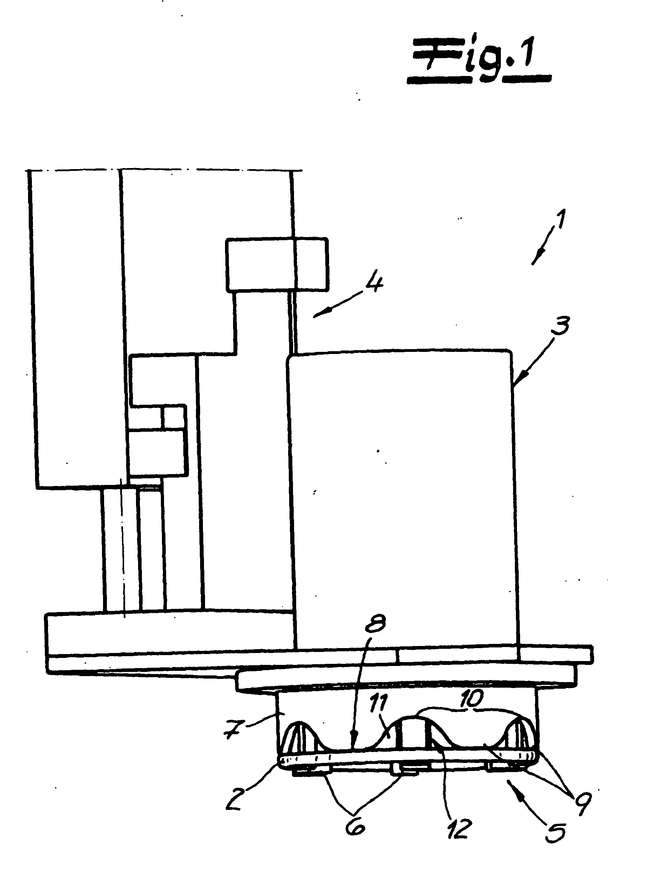

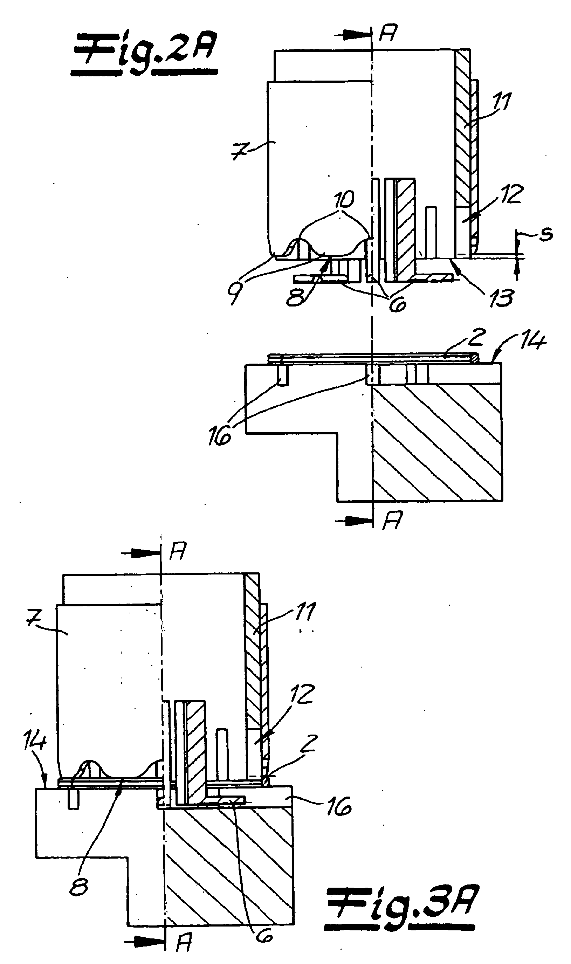

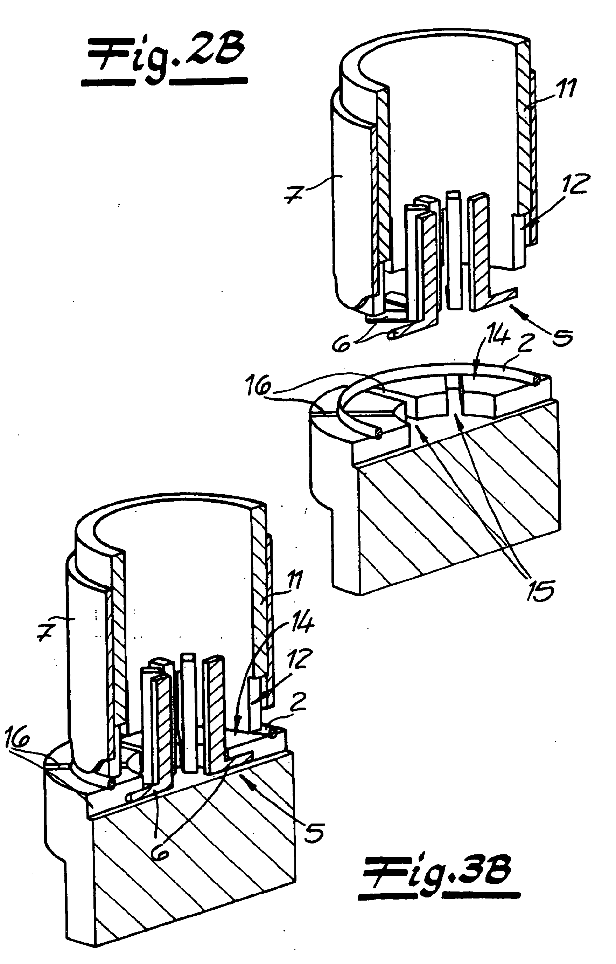

Die Fig. 1 zeigt ein Montagewerkzeug 1 zur Montage eines Elastomerrings 2. Das Montagewerkzeug 1 weist ein Gehäuse 3 auf, das an einem Schlitten 4 befestigt ist und durch eine Schlittenbewegung linear verstellbar ist. Im Gehäuse 3 ist eine Greifeinheit 5 gelagert, die mehrere an der Unterseite des Gehäuses 3 vorstehende, radial verstellbare Finger 6 aufweist. An der Unterseite des Gehäuses 3 ist ferner eine Hülse 7 angeordnet, die eine stimseitige Profilfläche 8 aus alternierend angeordneten vorstehenden Profilabschnitten 9 und zurückspringenden Profilabschnitten 10 aufweist. Die vorstehenden und zurückspringenden Profilabschnitte 9, 10 bilden ein wellenförmiges Profil in Umfangsrichtung. Die Greifeinheit 5 ist zwischen einer in Fig. 1 dargestellten ersten Position, in der die Finger 6 an der Unterseite der Hülse 7 vorstehen, und einer zweiten Position, in der die Finger in die zurückspringenden Profilabschnitte 10 der Profilfläche 8 eintauchen, relativ zur Hülse 7 axial verstellbar. Ferner können die Finger 6 der Greifeinheit 5 in radialer Richtung zwischen zwei Funktionsstellungen verstellt werden. In einer ersten Funktionsstellung liegt das freie Ende der Finger 6 auf einem Kreis, dessen Durchmesser kleiner ist als der Innendurchmesser der Hülse 7, so dass die Finger 6 der Greifeinheit 5 durch den zu montierenden Elastomerring 2 hindurch bewegt werden können. In der zweiten Funktionsstellung, die in Fig. 1 dargestellt ist, liegt das freie Ende der Finger 6 auf einem Kreis, dessen Durchmesser dem Außendurchmesser der Hülse 7 entspricht. Die Finger 6 unterfassen den Elastomerring 2 und ziehen den Elastomerring 2 mit einer axialen Spannbewegung der Greifeinheit 5 gegen die Profilfläche 8 der Hülse 7. Um dabei eine radiale Deformierung des Elastomerrings 2 zu vermeiden, ist innerhalb der Hülse 7 eine Kalibrierhülse 11 angeordnet, die an der Profilfläche 8 vorsteht und von den Fingern 6 der Greifeinheit 5 durchfasste mantelseitige Schlitze 12 aufweist. Aus einer vergleichenden Betrachtung der Fig. 1 und den Fig. 2A/2B wird deutlich, dass die Kalibrierhülse 11 eine plane Stirnfläche 13 aufweist, die an den vorstehenden Profilabschnitten 9 der Profilfläche 8 um eine Länge s übersteht, die kleiner ist als die Dicke des an der Profilfläche 8 der Hülse 7 anliegenden Elastomerrings 2.

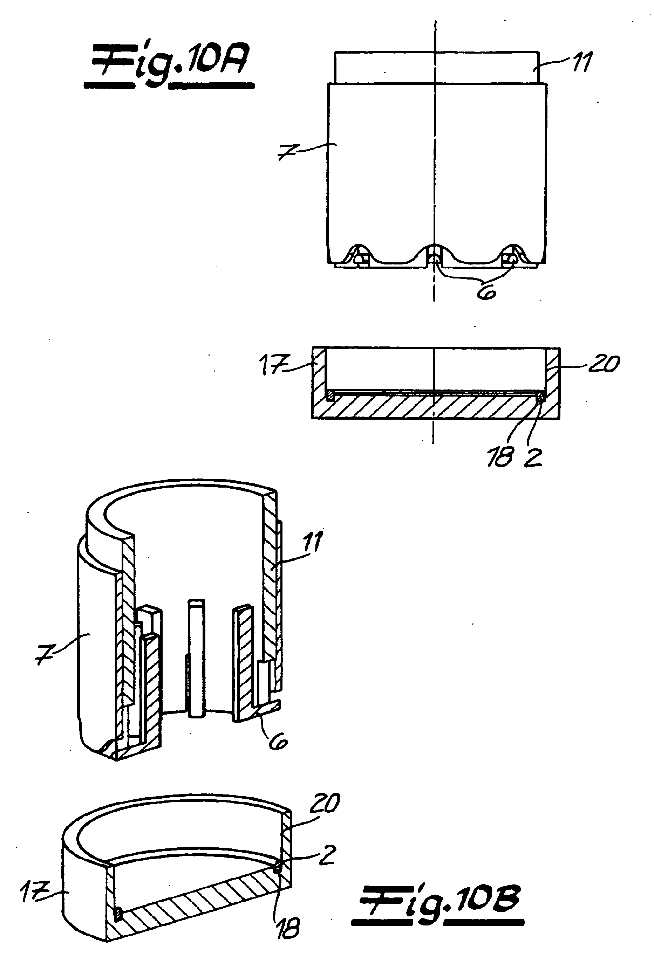

Das in den Figuren dargestellte Montagewerkzeug 1 dient zum Einsetzen eines Elastomerrings 2 in eine Ringnut, die in einer Stirnfläche innerhalb eines Hohlkörpers angeordnet ist. Die Verfahrensschritte des Montageverfahrens sind in den Fig. 2A/2B bis 10A/10B dargestellt.

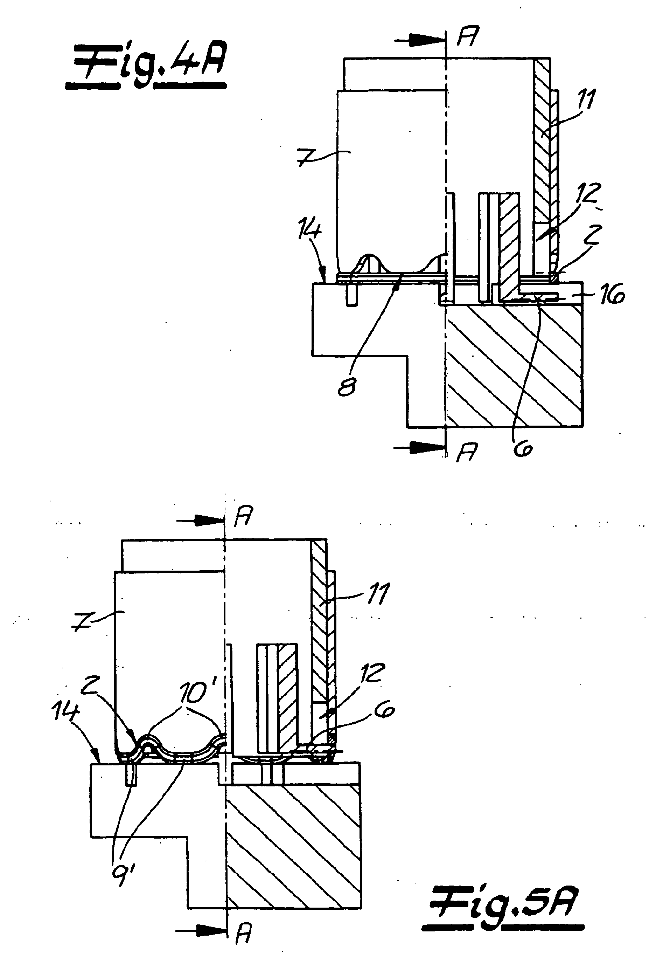

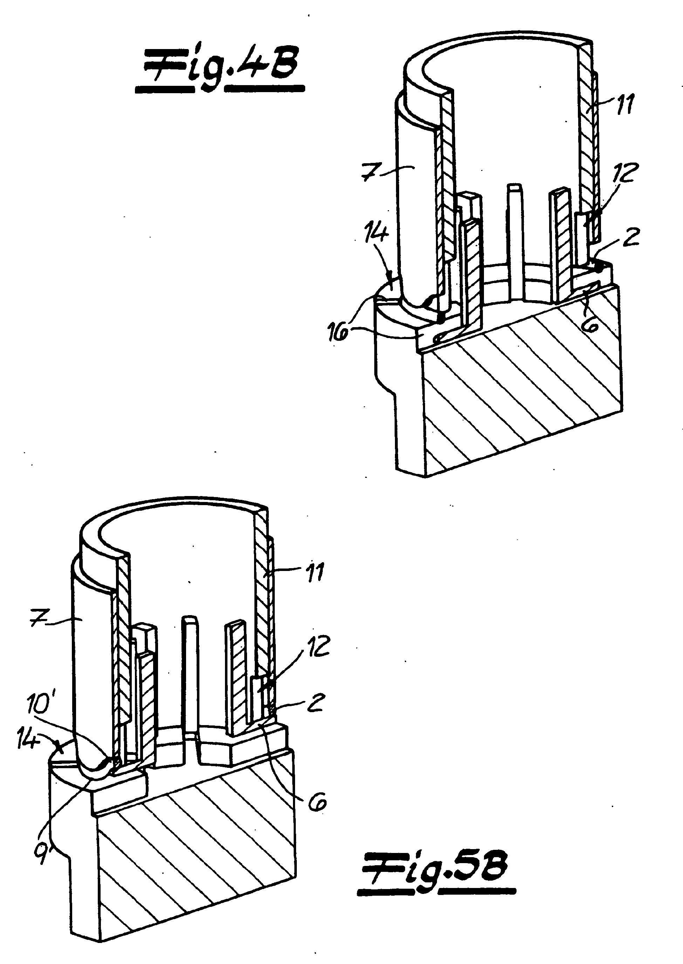

In einem ersten Verfahrensschritt a) wird der zu montierende Elastomerring 2 von den radial verstellbaren Fingern 6 der Greifeinheit 5 aufgenommen. Die Aufnahme bzw. Übergabe an das Montagewerkzeug 1 ist in Fig. 2A bis Fig. 4A bzw. Fig. 2B bis Fig. 4B dargestellt. Der Elastomerring 2 liegt zur Übergabe auf einer Fläche 14 auf, in der eine Aufnahmevertiefung 15 für die Greifeinheit 5 mit sternförmig sich erstreckenden Nuten 16 angeordnet ist. Die Greifeinheit 5 wird durch den auf der Fläche 14 aufliegenden Elastomerring 2 hindurch in die Aufnahmevertiefung 15 eingeführt (Fig. 2A/2B und Fig. 3A/3B). Anschließend werden die Finger 6 der Greifeinheit 5 radial nach außen verstellt und unterfassen den Elastomerring 2 (Fig. 4A/4B). Durch eine axiale Stellbewegung der Greifeinheit 5 relativ zu der die Greifeinheit umgebenden Hülse 7 wird der Elastomerring 2 anschließend gegen die stirnseitige Profilfläche 8 der Hülse 7 gespannt, wobei der gegen die Profilfläche 8 gespannte Elastomerring 2 in Umfangsrichtung einen wellenförmigen Verlauf aus alternierend vorstehenden Abschnitten 9' und zurückspringenden Abschnitten 10' einnimmt (Fig. 5a/5B).

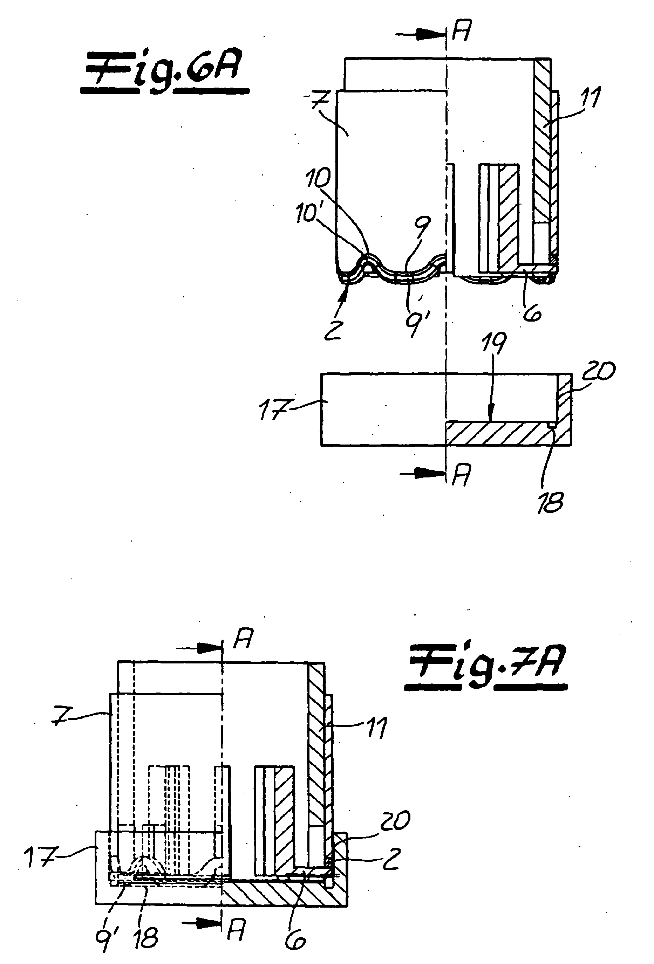

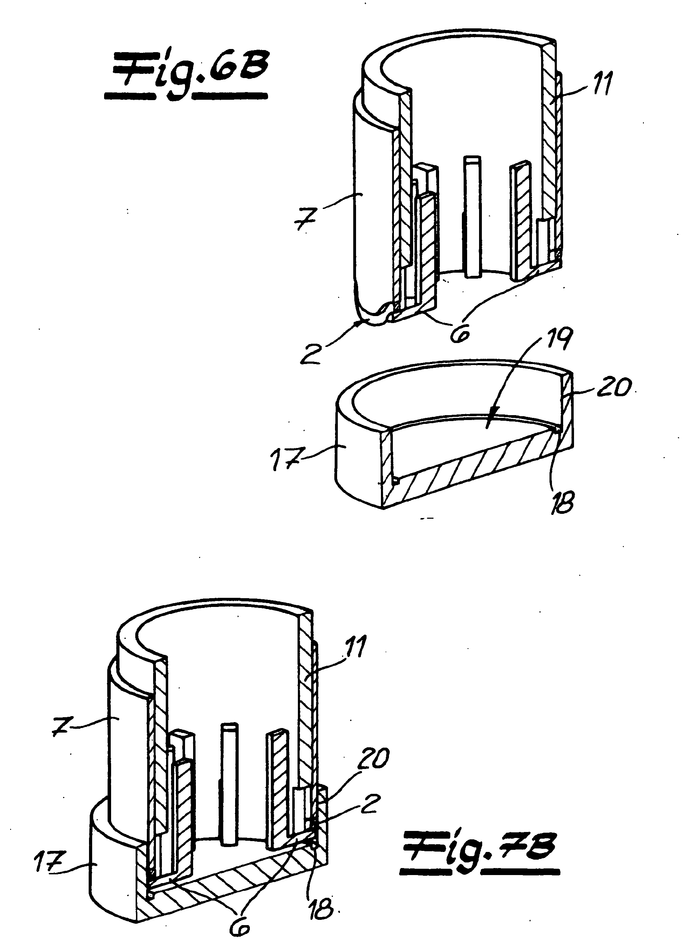

In den nachfolgenden Verfahrensschritten wird der Elastomerring 2 mittels des Montagewerkzeuges 1 in einen Hohlkörper 17 eingeführt und in eine Ringnut 18, die in einer Stirnfläche 19 innerhalb des Hohlkörpers 17 angeordnet ist, eingesetzt. Bei dem Hohlkörper 17 handelt es sich beispielsweise um einen Gehäusedeckel, an dessen innenliegender Stimfläche ein elastomerer Dichtungsring montiert werden muss. Der Darstellung in den Fig. 6A/6B entnimmt man, dass an den äußeren Umfang der Ringnut 18 eine zylindrische Mantelfläche 20 angrenzt, die mit einem Gewinde versehen sein kann. Zwischen der Ringnut 18 und der Mantelfläche 20 ist häufig nur ein Abstand von wenigen Zehntelmillimetern. Mit dem erfindungsgemäßen Verfahren ist es möglich, den Elastomerring ohne radiale Deformierung, ohne Rollbewegung und ohne einen Kontakt des Montagewerkzeuges 1 an den Innenflächen des Hohlkörpers 17 in die Ringnut 18 einzusetzen. In einem zweiten Verfahrensschritt b) wird der wellenförmig gespannte Elastomerring 2 mittels einer axialen Stellbewegung des Montagewerkzeuges 1 vor der Ringnut 18 positioniert, wobei die an Wellenbergen der Profilfläche 8 anliegenden Abschnitte 9' des Elastomerrings 2 in die Ringnut 18 eintauchen (Fig. 7A/7B).

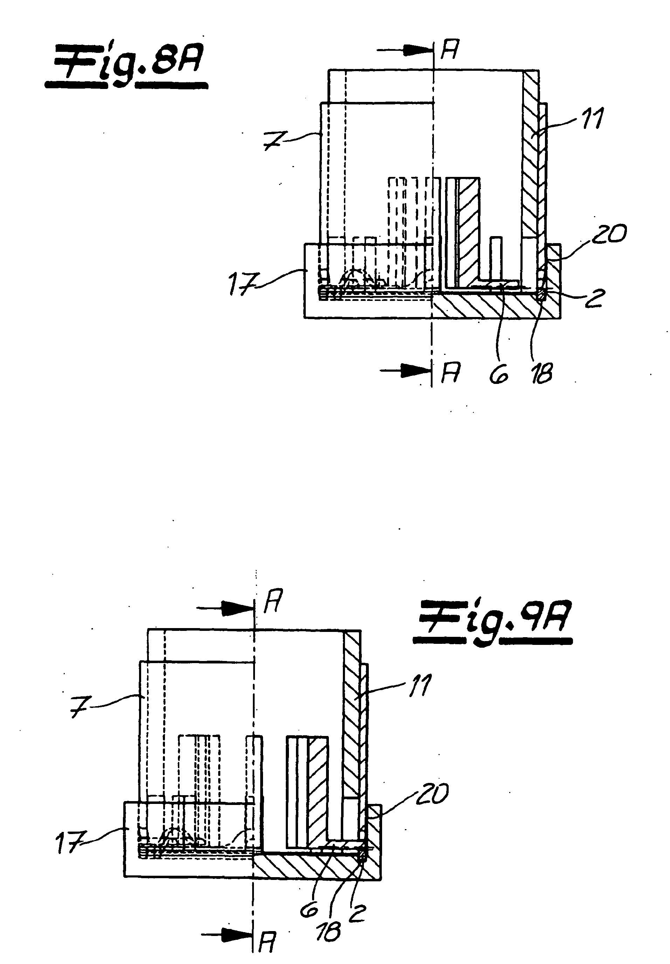

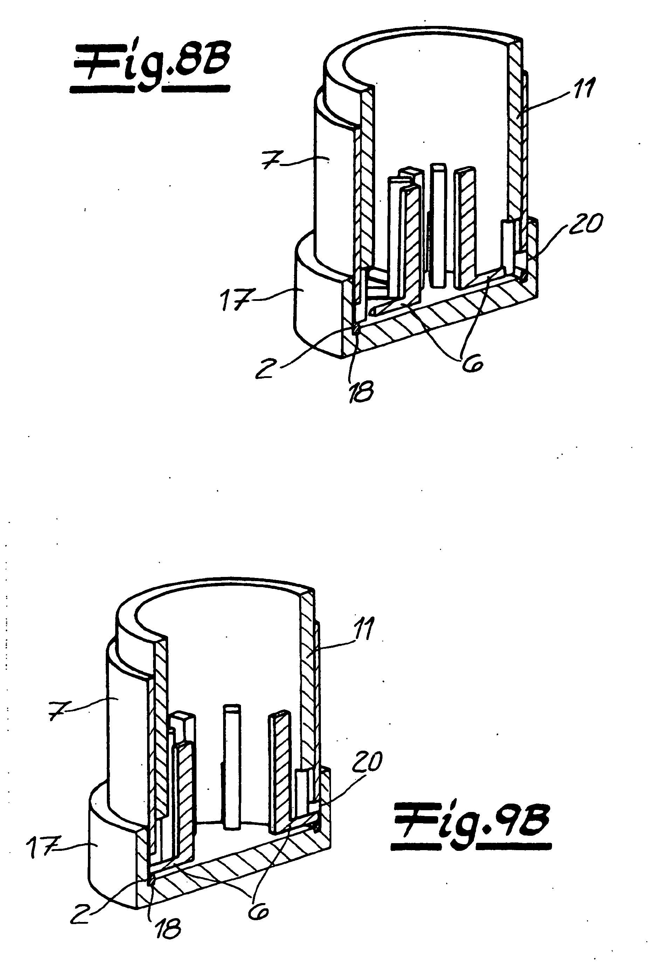

In einem dritten Verfahrensschritt c) wird die wellenförmige Vorspannung des Elastomerrings 2 mittels einer radial nach innen gerichteten Stellbewegung der Finger 6 der Greifeinheit 5 gelöst. Dabei federt der Elastomerring 2 in eine plane Lage zurück und schnappt in die Ringnut 18 ein (Fig. 8A/8B).

Um einen festen Sitz des Elastomerrings 2 in der Ringnut 18 sicherzustellen, kann der bereits in der Ringnut 18 liegende Elastomerring 2 nachgedrückt werden. Das Nachdrücken ist in Fig. 9A/9B dargestellt. Die Finger 6 der Greifeinheit 5 sind im Anschluss an den Verfahrensschritt c) wieder radial nach außen verstellt worden, wobei sie den in der Ringnut 18 liegenden Elastomerring 2 übergreifen. Das Nachdrücken des Elastomerrings 2 erfolgt mittels einer axialen Stellbewegung der Greifeinheit 5.

Nach der Montage des Elastomerrings 2 in der Ringnut 18 wird das Montagewerkzeug 1 wieder aus dem Hohlkörper 17 herausgezogen (Fig. 10A/10B).

## Patentansprüche

1. Verfahren zum Einsetzen eines Elastomerrings (2) in eine Ringnut (18), die in einer Stimfläche (19) innerhalb eines Hohlkörpers (17) angeordnet ist, **dadurch gekennzeichnet, dass** das Verfahren die folgenden Verfahrensschritten aufweist:
a) der Elastomerring (2) wird von radial verstellbaren Fingern (6) einer Greifeinheit (5) aufgenommen und durch eine axiale Relativbewegung zwischen der Greifeinheit (5) und einer die Greifeinheit umgebenden Hülse (7) gegen eine stirnseitige Profilfläche (8) der Hülse (7) gespannt, wobei der gegen die Profilfläche (8) gespannte Elastomerring (2) in Umfangsrichtung einen wellenförmigen Verlauf aus alternierend vorstehenden Abschnitten (9') und zurückspringenden Abschnitten (10') einnimmt;
b) der wellenförmig gespannte Elastomerring (2) wird vor der Ringnut (18) positioniert, wobei die vorstehenden Abschnitte (9') des Elastomerrings (2) in die Ringnut (18) eintauchen;
c) mittels einer radial nach innen gerichteten Stellbewegung der Finger (6) der Greifeinheit (5) wird die wellenförmige Verspannung des Elastomerrings (2) gelöst, wobei der Elastomerring (2) in eine plane Lage zurückfedert und dabei in die Ringnut (18) einschnappt.

2. Verfahren nach Anspruch 1, **dadurch gekennzeichnet, dass** der Elastomerring (2) im Verfahrensschritt a) von einer Fläche (14) aufgenommen wird, in der eine Aufnahmevertiefung (15) für die Greifeinheit (5) mit sternförmig sich erstreckenden Nuten (16) angeordnet ist, wobei die Greifeinheit (5) durch den auf der Fläche (14) aufliegenden Elastomerring (2) in die Aufnahmevertiefung (15) eingeführt wird und wobei die Finger (6) der Greifeinheit (5) anschließend radial nach außen verstellt werden und den Elastomerring (2) unterfassen.

3. Verfahren nach Anspruch 1 oder 2, **dadurch gekennzeichnet, dass** die Finger (6) der Greifeinheit (5) im Anschluss an den Verfahrensschritt c) radial nach außen verstellt werden, wobei sie den in der Ringnut (18) liegenden Elastomerring (2) übergreifen, und dass der Elastomerring (2) mittels einer axialen Stellbewegung der Greifeinheit (5) in der Ringnut (18) nachgedrückt wird.

4. Montagewerkzeug zur Durchführung des Verfahrens nach einem der Ansprüche 1 bis 3 mit einem Gehäuse (3), **dadurch gekennzeichnet, dass** das Montagewerkzeug
eine im Gehäuse (3) gelagerte Greifeinheit (5), die mehrere an der Unterseite des Gehäuses (3) vorstehende radial verstellbare Finger (6) aufweist, und
eine an der Unterseite des Gehäuses (3) angeordnete Hülse (7), die eine stirnseitige Profilfläche (8) aus alternierend angeordneten vorstehenden Profilabschnitten (9) und zurückspringenden Profilabschnitten (10) aufweist,
umfasst, wobei die Greifeinheit (5) zwischen einer ersten Position, in der die Finger (6) an der Unterseite der Hülse (7) vorstehen, und einer zweiten Position, in der die Finger (6) in die zurückspringenden Profilabschnitte (10) der Profilfläche (8) eintauchen, axial verstellbar ist.

5. Montagewerkzeug nach Anspruch 4, **dadurch gekennzeichnet, dass** die stimseitige Profilfläche (8) der Hülse (7) in Umfangsrichtung ein wellenförmiges Profil aus gerundeten Wellenbergen und Wellentälern aufweist.

6. Montagewerkzeug nach Anspruch 4 oder 5, **dadurch gekennzeichnet, dass** die Finger (6) der Greifeinheit (5) in radialer Richtung zwischen zwei Funktionsstellungen verstellbar sind, wobei das freie Ende der Finger (6) in der ersten Funktionsstellung auf einem Kreis liegt, dessen Durchmesser kleiner ist als der Innendurchmesser der Hülse (7), und wobei das freie Ende der Finger (6) in der zweiten Funktionsstellung auf einem Kreis liegt, dessen Durchmesser dem Außendurchmesser der Hülse (7) entspricht.

7. Montagewerkzeug nach einem der Ansprüche 4 bis 6, **dadurch gekennzeichnet, dass** innerhalb der Hülse (7) eine Kalibrierhülse (11) angeordnet ist, die an der Profilfläche (8) axial vorsteht und von den Fingern (6) der Greifeinheit (5) durchfasste mantelseitige Schlitze (12) aufweist.

8. Montagewerkzeug nach Anspruch 7, **dadurch gekennzeichnet, dass** die Kalibrierhülse (11) eine plane Stirnfläche (13) aufweist, die an den vorstehenden Abschnitten (9) der Profilfläche (8) um eine Länge (s) übersteht, die kleiner ist als die Dicke eines an der Profilfläche (8) der Hülse (7) anliegenden Elastomerrings (2).

## Claims

1. A method for inserting an elastomer ring (2) into an annular groove (18) which is arranged in a front surface (19) within a hollow body (17), **characterized in that** the method comprises the following method steps:
a) the elastomer ring (2) is received by radially displaceable fingers (6) of a gripper unit (5) and is tensioned by an axial relative movement between the gripper unit (5) and a sleeve (7) enclosing the gripper unit against a front-end profile surface (8) of the sleeve (7), wherein in the circumferential direction, the elastomer ring (2) tensioned against the profile surface (8) takes a wave-shaped course of alternating projecting sections (9') and recessed sections (10');
b) the elastomer ring (2) tensioned in a wave-shaped manner is positioned in front of the annular groove (18), wherein the projecting sections (9') of the elastomer ring (2) plunge into the annular groove (18);
c) by means of a radially inwardly directed actuating movement of the fingers (6) of the gripper unit (5), the wave-shaped tension of the elastomer ring (2) is released, wherein the elastomer ring (2) springs back into a planar position and snaps into the annular groove (18).

2. The method according to claim 1, **characterized in that** the elastomer ring (2) is received in the method step a) by a surface (14) in which a receiving recess (15) having grooves (16) which extend in a star-shaped manner is arranged for the gripper unit (5), wherein the gripper unit (5) is inserted through the elastomer ring (2) resting on the surface (14) into the receiving recess (15) and wherein the fingers (6) of the gripper unit (5) are subsequently displaced radially outward and engage the elastomer ring (2) from underneath.

3. The method according to claim 1 or claim 2, **characterized in that** subsequent to the method step c), the fingers (6) of the gripper unit (5) are displaced radially outward, wherein they overlap the elastomer ring (2) lying in the annular groove (18), and that the elastomer ring (2) is pressed into the annular groove (18) by means of an axial actuating movement of the gripper unit (5).

4. An assembly tool for carrying out the method according to any one of the claims 1 to 3 having a housing (3), **characterized in that** the assembly tool comprises
a gripper unit (5) which is mounted in the housing (3) and which has a plurality of radially displaceable fingers (6) projecting on the bottom side of the housing (3), and
a sleeve (7) which is arranged on the bottom side of the housing (3) and which has a front-end profile surface (8) of alternatingly arranged projecting profile sections (9) and recessed profile sections (10),
wherein the gripper unit (5) is axially displaceable between a first position in which the fingers (6) project on the bottom side of the sleeve (7) and a second position in which the fingers (6) plunge into the recessed profile sections (10) of the profile surface (8).

5. The assembly tool according to claim 4, **characterized in that** in the circumferential direction, the front-end profile surface (8) of the sleeve (7) has a wave-shaped profile of rounded wave crests and wave troughs.

6. The assembly tool according to claim 4 or claim 5, **characterized in that** the fingers (6) of the gripper unit (5) are displaceable in the radial direction between two functional positions, wherein in the first functional position, the free end of the fingers (6) lies on a circle, the diameter of which is smaller than the inner diameter of the sleeve (7) and wherein in the second functional position, the free end of the fingers (6) lies on a circle, the diameter of which corresponds to the outer diameter of the sleeve (7).

7. The assembly tool according to any one of the claims 4 to 6, **characterized in that** inside the sleeve (7) a calibration sleeve (11) is arranged which axially projects on the profile surface (8) and has slots (12) on the casing side which are penetrated by the fingers (6) of the gripper unit (5).

8. The assembly tool according to claim 7, **characterized in that** the calibration sleeve (11) has a planar front surface (13) which protrudes at the projecting sections (9) of the profile surface (8) by a length (s) which is smaller than the thickness of an elastomer ring (2) resting on the profile surface (8) of the sleeve (7).

## Revendications

1. Procédé destiné à l'insertion d'une bague élastomère (2) dans une rainure annulaire (18) disposée dans une face avant (19) à l'intérieur d'un corps creux (17), **caractérisé en ce que** le procédé présente les étapes de procédé suivantes :
a) la bague élastomère (2) est reçue par des doigts (6) d'une unité de préhension (5) déplaçables radialement et serrée par un mouvement relatif axial entre l'unité de préhension (5) et un manchon (7) entourant l'unité de préhension, contre une surface profilée avant (8) du manchon (7), sachant que la bague élastomère (2) serrée contre la surface profilée (8) adopte dans le sens circonférentiel une tracé ondulé de sections en saillie (9') alternant avec des sections en arrière (10') ;
b) la bague élastomère (2) ondulée serrée est positionnée devant la rainure annulaire (18), sachant que les sections en saillie (9') de la bague élastomère (2) plongent dans la rainure annulaire (18) ;
c) le serrage ondulé de la bague élastomère (2) est défait au moyen d'un mouvement de réglage dirigé vers l'intérieur des doigts (6) de l'unité de préhension (5), sachant que la bague élastomère (2) est rappelée dans une position plane et se bloque ainsi dans la rainure annulaire (18).

2. Procédé selon la revendication 1, **caractérisé en ce que** la bague élastomère (2) est reçue dans l'étape de procédé a) par une surface (14) dans laquelle un creux de réception (15) est disposé pour l'unité de préhension (5) avec des rainures (16) s'étendant en étoile, sachant que l'unité de préhension (5) est introduite dans le creux de réception (15) par la bague élastomère (2) reposant sur la surface (14) et sachant que les doigts (6) de l'unité de préhension (5) sont ensuite déplacés radialement vers l'extérieur et saisissent la bague élastomère (2) par le bas.

3. Procédé selon la revendication 1 ou 2, **caractérisé en ce que** les doigts (6) de l'unité de préhension (5) sont déplacés radialement vers l'extérieur suite à l'étape de procédé c), sachant qu'ils recouvrent la bague élastomère (2) reposant dans la rainure annulaire (18), et **en ce que** la bague élastomère (2) est repoussée en arrière dans la rainure annulaire (18) au moyen d'un mouvement de réglage axial de l'unité de préhension (5).

4. Outil de montage pour exécuter le procédé selon l'une des revendications 1 à 3 comprenant un boîtier (3), **caractérisé en ce que** l'outil de montage
comprend une unité de préhension (5) placée dans le boîtier (3) qui présente une pluralité de doigts (6) en saillie sur la face inférieure du boitier (3) déplaçables radialement, et
comprend un manchon (7) disposé sur la face inférieure du boitier (3) qui présente une surface profilée avant (8) de sections profilées en saillie (9) et de sections profilées en arrière (10) disposées en alternance,
sachant que l'unité de préhension (5) est déplaçable axialement entre une première position, dans laquelle les doigts (6) sont en saillie sur la face inférieure du manchon (7), et une deuxième position, dans laquelle les doigts (6) plongent dans les sections profilées en arrière (10) de la surface profilée (8).

5. Outil de montage selon la revendication 4, **caractérisé en ce que** la surface profilée avant (8) du manchon (7) présente dans le sens circonférentiel un profil ondulé de sommets et de creux de vagues arrondis.

6. Outil de montage selon la revendication 4 ou 5, **caractérisé en ce que** les doigts (6) de l'unité de préhension (5) sont déplaçables entre deux positions de fonctionnement dans le sens radial, sachant que l'extrémité libre des doigts (6) repose, dans la première position de fonctionnement, sur un cercle dont le diamètre est inférieur au diamètre intérieur du manchon (7) et sachant que l'extrémité libre des doigts (6) repose, dans la deuxième position de fonctionnement, sur un cercle dont le diamètre correspond au diamètre extérieur du manchon (7).

7. Outil de montage selon l'une des revendications 4 à 6, **caractérisé en ce qu'**à l'intérieur du manchon (7), un manchon de calibrage (11) est disposé qui fait saillie axialement sur la surface profilée (8) et présente, du côté de l'enveloppe, des fentes (12) saisies par les doigts (6) de l'unité de préhension (5).

8. Outil de montage selon la revendication 7, **caractérisé en ce que** le manchon de calibrage (11) présente une surface avant plane (13) qui dépasse sur les sections en saillie (9) de la surface profilée (8) d'une longueur (s) qui est inférieure à l'épaisseur d'une bague élastomère (2) reposant sur la surface profilée (8) de la douille (7).
